Europäisches Patentamt

European Patent Office

Office européen des brevets

(19)

(11) Veröffentlichungsnummer : **0 394 308 B1**

(12)                            **EUROPÄISCHE PATENTSCHRIFT**

(45) Veröffentlichungstag der Patentschrift :
     **20.05.92 Patentblatt 92/21**

(21) Anmeldenummer : **89900204.2**

(22) Anmeldetag : **05.10.88**

(86) Internationale Anmeldenummer :
     **PCT/EP88/00884**

(87) Internationale Veröffentlichungsnummer :
     **WO 89/03780 05.05.89 Gazette 89/10**

(51) Int. Cl.⁵ : **B60T 8/00,** B60K 31/00,
                **B60K 28/16**

(54) **VERFAHREN ZUR FORTLAUFENDEN BESTIMMUNG DES KRAFTSCHLUSSBEIWERTS -g(m)
     UND/ODER DER STEIGUNG K-g(m) DER -g(m)-SCHLUPFKURVE.**

(30) Priorität : **22.10.87 DE 3735673**

(43) Veröffentlichungstag der Anmeldung :
     **31.10.90 Patentblatt 90/44**

(45) Bekanntmachung des Hinweises auf die
     Patenterteilung :
     **20.05.92 Patentblatt 92/21**

(84) Benannte Vertragsstaaten :
     **DE FR IT SE**

(56) Entgegenhaltungen :
     EP-A- 0 032 853
     EP-A- 0 201 843
     DE-A- 3 535 843

(56) Entgegenhaltungen :
     DE-A- 3 545 717
     DE-A- 3 625 945
     DE-A- 3 639 388
     US-A- 3 835 361

(73) Patentinhaber : **ROBERT BOSCH GMBH
     Postfach 30 02 20
     W-7000 Stuttgart 30 (DE)**

(72) Erfinder : **CAO, Chi-Thuan
     Tubizerstrasse 35
     W-7015 Korntal-Münchingen 1 (DE)**

(74) Vertreter : **Kammer, Arno, Dipl.-Ing.
     ROBERT BOSCH GmbH Zentralabteilung
     Patente Postfach 30 02 20
     W-7000 Stuttgart 30 (DE)**

EP 0 394 308 B1

## Beschreibung

Die Erfindung betriff ein Verfahren zur fortlaufenden Bestimmung des Kraftschlußbeiwerts $\mu$ und/oder des Steigung $K\mu$ der $\mu$-Shlupfkurve gemäß den Oberbegriffen der unabhängigen Patentansprüchen 1 und 2

### Stand der Technik

Aus der ATZ 83 (1981) Heft 1 S. 31-36 ist ein derartiges Verfahren bekannt. Dort wird für diese Bestimmung neben dem Drehmoment an der Antriebsachse, die Fahrzeugbeschleunigung, der Radschlupf, die Fahrzeuggeschwindigkeit und einige während einer Fahrt konstante Größen benötigt. Man benötigt dort also relativ viele Sensoren.

Aus der deutschen Patentanmeldung P 35 35 843.2 ist ein Verfahren bekannt, bei dem mit Hilfe des gemessenen Bremsdrucks und der gemessenen Radgeschwindigkeit $\mu$ und $K\mu$ bestimmt werden. Hier sind diese größen jedoch nur im Bremsfall ermittelbar.

Aus der DE-A1-3 625 945 ist es bekannt, den Kraftschlußeiwert $\mu$ mit Hilfe des Drehmoments der Antriebsräder und der Beschleunigung der Anstriebsräder unter Anwendung des Impulssatzes der Mechanik zu ermitteln.

### Vorteile der Erfindung

Dem gegenüber haben die erfindungsgemäße Verfahren gemäß dem Ansprüchen 1 und 2 den Vorteil, daß die Größen $\mu$ und $K\mu$ bei angetriebenem Fahrzeug ermittelt werden können und daß dazu nur Sensoren für die Radgeschwindigkeit und das Motor-Drehmoment benötigt werden. Das Verfahren läßt sich in ein vorhandenes ABS und/oder ASR-Steuergrät integrieren, wobei die vorhandenen Radgeschwindigkeitssensoren mit benutzt werden können.

Mann kann die gewonnene Größe $\mu$ dem Fahrer zur Anzeige bringen, bzw. ihn ab bestimmten kleinen größen warnen, kann mit Hilfe des ermittelten $\mu$ den zu erwartenden Bremsweg errechnen und anzeigen und somit zur richtigen Einstellung der Fahrgeschwindigkeit beitragen und/oder kann das $\mu$ in eine Radarabstandswarnung oder Regelung als Parameter eingegeben und dort die Regelung bzw. Warnung in Abhängigkeit von dem $\mu$ beeinflussen.

Bei ASR läßt sich das eingegebene $\mu$ zur Verbesserung der Traktion ausnutzen.

Das gewonnene $K\mu$ kann bei der Antriebsschlupfregelung zur Einstellung eines bei dem herrschenden Untergrund optimalen Schlupfwerts benutzt werden.

### Figurenbeschreibung

Anhand der Zeichnung sollen ein Ausführungsbeispiel (hier: Heckantrieb) zur Durchführung des erfindungsgemäßen Verfahrens sowie Anwendungsmöglichkeiten dafür erläutert werden.

es zeigen:

Fig. 1 eine schematische Anordnung zur Bestimmung der Größen $K\mu$ und $\mu$ an beiden angetriebenen Rädern eines Fahrzeugs

Fig. 2 ein Blockschaltbild der Auswertschaltung

Fig. 3 ein Blockschaltbild, in dem das ermittelte $\mu$ verwendet wird

Fig. 4 eine Schar von $\mu$-Sclupfkurven zur Erläuterung der Anwendung der Fig. 5

Fig. 6 ein Blockschaltbild bei dem $K\mu$ verwendet wird

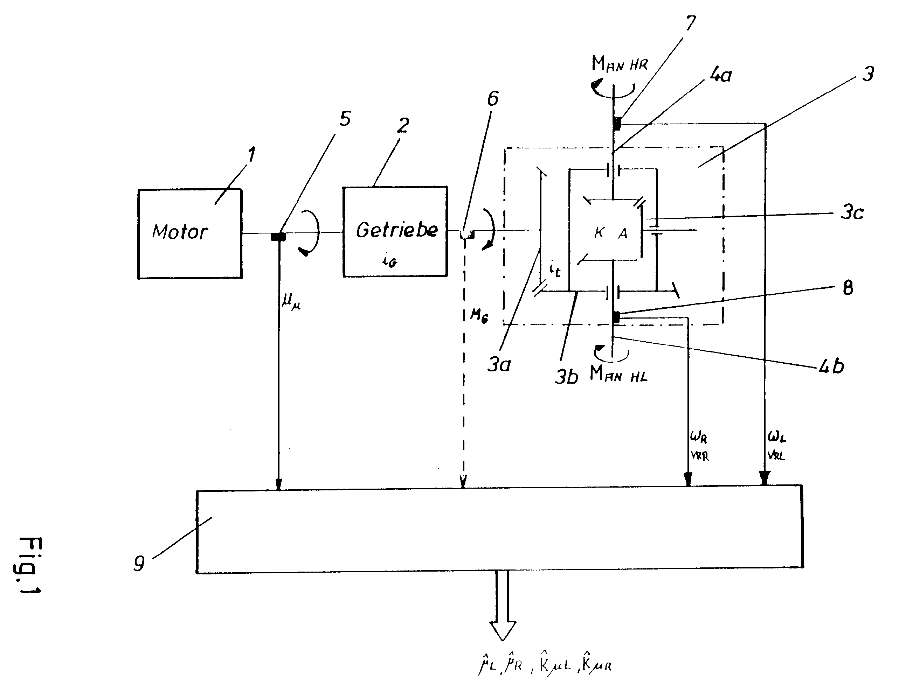

In Fig. 1 ist mit 1 ein Fahrzeugmotor, mit 2 ein Getriebe mit der Übersetzung $i_G$, mit 3 ein Differential (mit Ritzel 3 a, Tellerrad 3b und Antriebsrad 3 c) und mit 4 a und 4 b davon angetriebene Halbewellen bezeichnet.

An der Antriebswelle zwischen Motor 1 und Getriebe 2 ist ein Sensor 5 vorgesehen, der ein dem Motormoment M entsprechendes Signal an eine Auswerteschaltung (Rechner) 9 abgibt. Anstelle des Sensor 5 kann auch an der Antriebswelle hinter dem Getriebe 2 ein Sensor 6 zur Bestimmung des Getriebeausgangsmoments vorgesehen sein. Den beiden nicht dargestellten Rädern bzw. deren Antriebswellen 4 a und 4 b sind Geschwindigkeitssensoren 7 und 8 zugeordnet. Diese liefern der Radgeschwindigkeit $V_{RL}$ und $V_{RR}$ bzw. der Radwinkelgeschwindigkeit $\omega_R$ und $\omega_L$ entsprechende Signale an die Auswertschaltung 9. Diese liefert Schätzwerte der Kraftschlußbeiwerte $\hat{\mu}_R$ und $\hat{\mu}_L$ und/oder die Steigungen der $\mu$-Schlupfkurve $K_{\mu R}$ und $K_{\mu L}$.

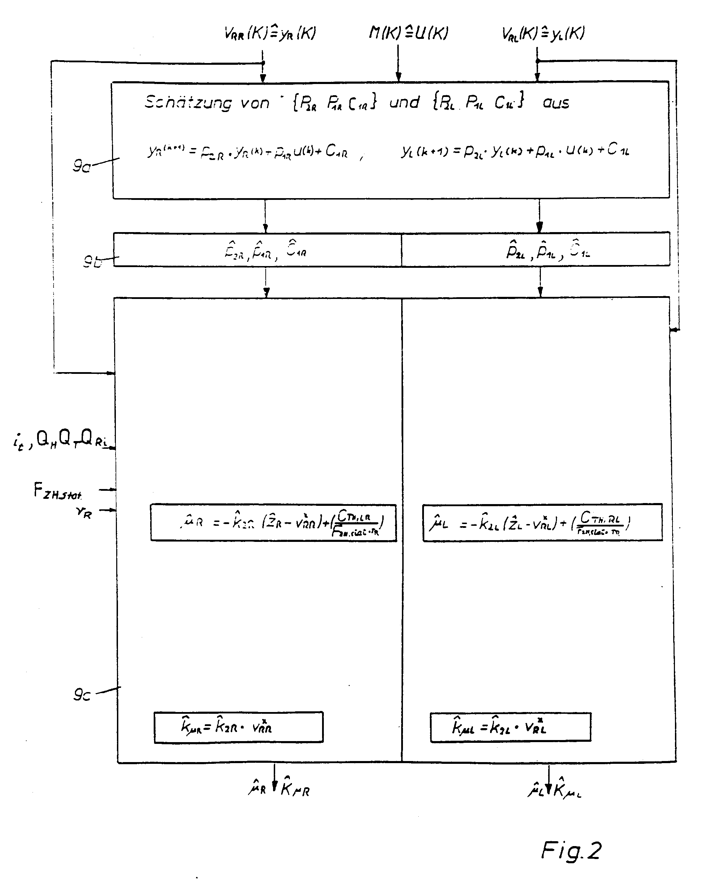

In Fig. 2 ist die Auswertschaltung 9 der Fig. 1 in drei Blocks unterteilt. Im Block 9 a erfolgt die Schätzung der Parameter $\hat{P}_{1R}$, $\hat{P}_{2R}$ und $\hat{C}_R$ für das rechte Rad und $\hat{P}_{1L}$, $\hat{P}_{2L}$ und $\hat{C}_L$ für das linke Rad auf der Basis von Identifikationsgleichungen.

$$Y_R (K + 1) = R_{2R} \cdot Y_R (K) + P_{1R} \cdot U (K) + C_R$$

bzw.

$$Y_L (K + 1) = P_{2L} \cdot Y_L (K) + P_{1L} \cdot U (K) + C_L$$

wobei $Y_R (K)$ und $Y_L (K)$ und $Y_R (K+1)$ und $Y_L (K+1)$ des gemessenen Radgeschwindigkeiten und $\hat{U} (K)$ das gemessene Motormoment sind.

Dies geschieht mit Hilfe von Identifikationsalgorithmen wie z.B. dem Least Squares Verfahren. Die jeweils ermittelten Schätzwerte $\hat{P}_{1R}$, $\hat{P}_{2R}$ und $\hat{C}_R$ bzw. $\hat{P}_{1L}$, $\hat{P}_{2L}$ und $\hat{C}_L$ werden in einem Block 9 b gespeichert und können bei der nachfolgenden Bestimmung der Größen $\hat{\mu}_L$ und $\hat{\mu}_R$ bzw. $\hat{K}_{\mu L}$ und $\hat{K}_{\mu R}$ in einem Block 9 c in Zeitabständen $T_A$ abgerufen werden.

Dem Block 9 c werden außerdem die Konstanten $i_t$ (Achsübersetzung), $\theta_T$ (Trägheitsmoment des Tellerrads), $\theta_H$ (Trägheitsmoment der angetriebenen Achse), $\theta_{Ri}$ (Trägheitsmoment des Ritzels), $F_{ZHstat}$ (statische Radlast des Rads (gemessen oder berechnet)) und $r_R$ (der Radius des Rads) sowie die Radgeschwindigkeiten $V_{RR}$ und $V_{RL}$ zugeführt.

Mit Hilfe der zugeführten Parameter, Konstanten und Meßgrößen wird in Block 9 c je ein Schätzwert $\hat{\mu}$ für den Reibbeiwert $\mu$ und/oder ein Schätzwert $k\mu$ für die augenblickliche Steigung $K\mu$ am Arbeitspunkt der $\mu$-Schlupfkurve für das linke und rechte angetriebene Rad bestimmt. Die Bestimmungsgleichungen lauten

$$\hat{\mu}_R = - \hat{K}_{2R} \cdot (\hat{Z}_R - V^*_{RR}) + \frac{C_{TH'LR}}{F_{ZHstat} \cdot r_R}$$

$$\hat{\mu}_R = - \hat{K}_{2L} \cdot (\hat{Z}_L - V^*_{RL}) + \frac{C_{TH'RL}}{F_{ZHstat} \cdot r_R}$$

Hierin bedeuten:

$$\hat{K}_{2R} = \frac{\theta^*_R \cdot V_o}{F_{ZH} \, stat \cdot r_R{}^2} \cdot \frac{-\ln \hat{P}_{2L}}{T_A}$$

$$\hat{K}_{2L} = \frac{\theta^*_R \cdot V_o}{F_{ZH} \, stat \cdot r_R{}^2} \cdot \frac{-\ln \hat{P}_{2R}}{T_A}$$

$$\hat{Z}_R = \frac{\hat{C}_R}{1 - \hat{P}_{2R}}$$

$$\hat{Z}_L = \frac{\hat{C}_L}{1 - \hat{P}_{2L}}$$

$V^*_{RR}$ und $V^*_{RL}$: die mit der Konstanten Rechnergröße $V_o$ normierten Radgeschwindigkeiten.

$$\theta^*_R = \frac{\theta_H}{2} + \frac{\theta_r + i_t{}^2 \theta_{Ri}}{2}$$

$$C_{TH'RL} = -C_{TH'RL} = -\frac{\theta_T + i_t{}^2 \theta_{Ri}}{2} \cdot \frac{\omega_L - \omega_R}{2}$$

$\dot{\omega}_R$, $\dot{\omega}_R$ die Winkelbeschleunigungen der Räder $\omega_R$ und $\omega_L$ können aus

$$\dot{\omega}_R (K) \approx \frac{\omega_R(K) - \omega_R(K-1)}{T_A} \text{ und}$$

$$\dot{\omega}_L (K) \approx \frac{\omega_L(K) - \omega_L(K-1)}{T_A}$$

ermittelt werden, wobei sich $\omega_R$ und $\omega_L$ durch $\frac{V_{RR}}{r_R}$ bzw. $\frac{V_{RL}}{r_L}$ ergeben.

Das gesamte Bestimmungsverfahren läßt sich bei front-, heck- und allradgetriebenen Fahrzeugen anwenden.

Die Werte für $\hat{K}\mu$ ergeben sich zu:

$$\hat{K}_{\mu R} = \hat{K}_{2R} \cdot V^*_{RR}$$

$$\hat{K}_{\mu L} = \hat{K}_{2L} \cdot V^*_{RL}.$$

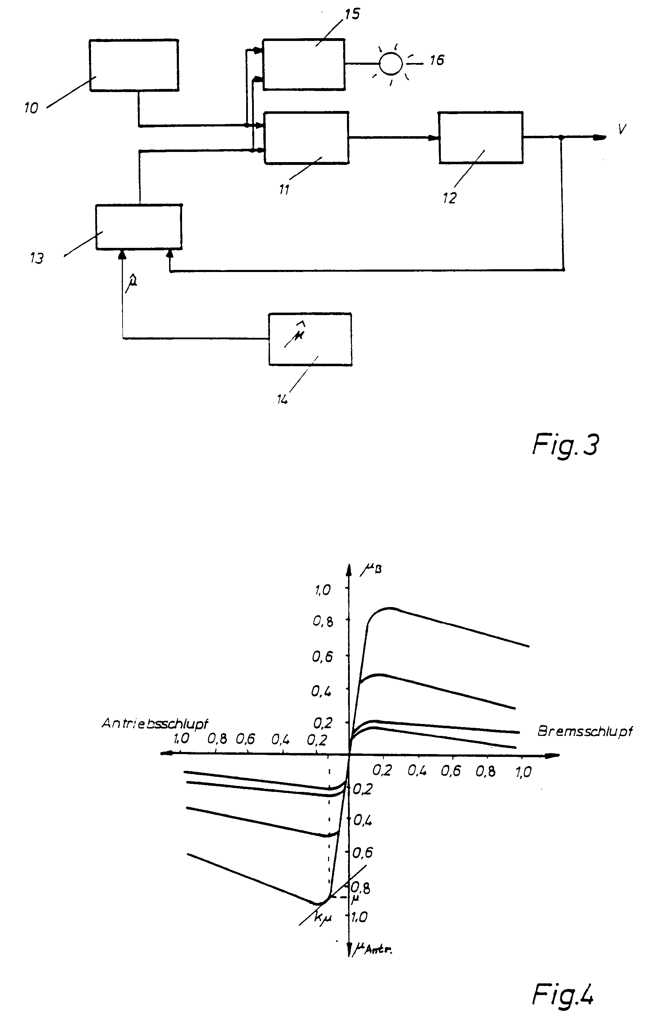

Zur Unfallverhütung dient die bekannte Radar-Absandswarnung bzw. Regelung. Sende- und Empfangsantenne des Radargeräts sind unter dem vorderen Stoßfänger untergebracht. Treffen Radarstrahlen auf ein Hindernis, wird die Zeit zwischen dem Aussenden des Radarsignals und dem Eintreffen des Echos gemessen. Aus den Meßdaten errechnet der Bordrechner den Abstand zum Hindernis. Aus Abstand, Geschwindigkeit und Straßenzustand ermittelt der Bordrechner den ratsamen Sicherheitsabstand, der als Sollwert für die Abstandswarnung bzw. -Regelung (Bremsen oder Motoreingriff) verwendet wird (Fig. 3). Bei der bisherigen bekannten Lösungen gibt es den Nachteil, daß der Fahrer den Straßenzustand durch Betrachtungen abschätzen muß. Er muß dann Information mit "trocken", "naß" oder "schneeglatt" einprogrammieren. Die geschilderte fortlaufende Bestimmung von Kraftschlußbeiwerten gemäß der Erfindung ist also eine relevante Unterstützung für den Einsatz der Abstandswarnung bzw. Regelung. Die on-line Schätzung von $\mu$ liefert sowohl eine automatische Parameterverstellung als auch präzise und aktuelle Werte. Vor allen bei Nacht- und Nebelfahrten, bei denen der Fahrer nicht mehr so sicher mit der Abschätzung von Gefahren ist, ist diese automatische Verstellung sinnvoll.

In Fig. 3 ist ein Abstandsradargerät mit 10, ein Regler mit 11, das Fahrzeug mit 12 und ein Sicherheitsabstandsbestimmungsblock mit 13 bezeichnet. Diesem wird die Geschwindigkeit des Fahrzeugs 12 und das geschätzte $\hat{\mu}$ vom $\mu$-Schätzer 14 zugeführt und er errechnet den notwendigen Sicherabstand. Dieser wird in Regler 11 mit dem Istabstand (vom Radargerät) verglichen und daraus wird eine Regelgröße für eine Bremsung oder eine Motordruckmomentbeeinflussung abgeleitet, um die Fahrzeuggeschwindigkeit zu variieren.

Alternativ oder zusätzlich kann von einem Vergleicher 15 eine Warnlampe 16 angesteuert werden, wenn ein zu geringer Abstand festgestellt wird.

Wenn kein Radargerät im Fahrzeug installiert wird, kann der physikalische benötigte Bremsweg $X_B$ kontinuierlich angezeigt werden. Diese kann z.B. durch die Faustformel angegeben werden:

$$X_B \approx \frac{V_A{}^2}{2g\mu}$$

g: Fallbeschleunigung, $V_A$: Ausgangsgeschwindigkeit,

wobei $X_B$ den physikalischen benötigten Bremsweg bei einer Bremsung mit blockierenden Rädern auf dem interessierenden Straßenbelag mit dem Kraftschlußbeiwert $\mu$ darstellt. Auch hier liefert die on-line Abschätzung von $\mu$ einen wichtigen Beitrag zur besseren Überwachung der Fahrzeuggeschwindigkeit.

Bei der Antriebs-Schlupf-Regelung wird das Rad in einem möglichst engen Schlupfbereich in der Nähe der maximalen Kraftschlußes gehalten. Da die Kraftschlußkurven u.a. abhängig von:

– dem Straßen- und Reifenzustand
– der Fahrzeuggeschwindigkeit
– der Radlast
– der Temperatur sowie
– dem Reifenschräglaufwinkel bzw. der in Anspruch genommenen Seitenführungskraft bei Kurvenfahrt sind ist der Schlupf selbst keine geeignete Regelgröße für die Regelung. Für diesen Zweck dienen die gemäß dieser Erfindung fortlaufend gewonnenen on-line Schätzungen

– des Kraftschlußeiwerts $\mu$ und
– der Steigung der Kraftschlußkurven $k_\mu = \dfrac{d\mu}{ds}$.

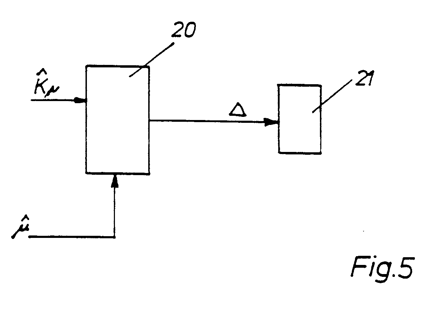

Eine eindeutige Regelgröße erhält man aus der Tatsache, daß die Steigung beim maximalen Kraftschluß gleich null ist. Um aber die bei Kurvenfahrt notwendigen Seitenführungskräfte aufbringen zu können, wird eine kleine positive Steigung, kurz vor dem. maximalen Kraftschlußbeiwert im stabilen Bereich als Sollwert für die Antriebsschlupfregelung gewählt (siehe Fig. 4).

In Fig. 5 ist ein Blockschaltbild hierfür gezeigt. Einem Vergleicher 20 wird der geschätzte Wert $\hat{K}_\mu$ zugeführt, der diesen mit einem vorgegebenen kleinen positiven Sollwert $K^*_\mu$ vergleicht. Aus der Abweichung wird eine Regelgröße $\Delta$ gewonnen, die zur Beeinflussung eines Bremsdrucksteuergeräts 21 dient und den Bremsdruck so variiert, daß der ermittelte Wert für $\hat{K}_\mu$ sich den Sollwert nähert.

Der Sollwert kann bei hohem $\mu$ kleiner gewählt werden. Dem Vergleicher 20 wird deshalb auch de ermittelte Wert für $\hat{\mu}$ zugeführt, der den Sollwert entsprechend dem bestimmten $\mu$ variiert.

Formelzeichen

| | |
|---|---|
| $\wedge$ | Bezeichnung für geschätzter Größen |
| K | Zeitschritt, z.B. $\mu(K)$ bedeutet $\mu$ zum Zeitschritt K |
| $C_{TH'LR}$ | Koppelterm, hinten, von links auf rechts |
| $C_{TH'RL}$ | Koppelterm, hinten, von rechts auf links |
| $F_{ZH}$,stat | statische Radlast (hinten) |
| $i_G$ | Getriebeübersetzung |
| $i_t$ | Achsübersetzung |
| $\hat{K}_{\mu L}, \hat{K}_{\mu R}$ | Steigung der $\mu$-s-Kennlinien, hinten links und hinten rechts |
| $\hat{K}_{2L}, \hat{K}_{2R}$ | Verhältnis $\dfrac{T_R \text{ stat}}{T_{ERS}}$, hinten links und hinten rechts |
| $M_G$ | Drehmoment hinter dem Getriebe |
| M | Motormoment |
| $P_{2L}, P_{1L}, C_{1L}$ | die zu schätzenden Parameter (links) |

| | |
|---|---|
| $P_{2R}, P_{1R}, C_{1R}$ | die zu schätzenden Parameter (rechts) |
| $r_R$ | Radradius |
| $T_A$ | Abtastrate |
| $V_o$ | Bezugsgröße für die Normierung der Radgeschwindigkeit |
| $V^*_{RL}, V^*_{RR}$ | Normierte Radgeschwingkeit, hinten links und hinten rechts |
| $V_{RL}, V_{RR}$ | Radgeschwindigkeit, hinten links und hinten rechts |
| $\hat{Z}_L, \hat{Z}_R$ | Ersatz-Konstant, hinten links und hinten rechts |
| $\mu$ | Kraftschlußbeiwert |
| $\theta_H$ | Trägheitsmoment der Hinterachs |
| $\theta_R$ | Gesamtträgheitmoment, Hinteres Rad |
| $\theta_{Ri}$ | Trägheitsmoment des Ritzels |
| $\theta_T$ | Trägheitsmoment des Tellerrades |
| $\omega_{R,L}, \omega_{R,R}$ | Radwinkelgeschwindigkeit, hinten links und hinten rechts |
| $\omega_{R,L}, \omega_R, R$ | Radwinkelbeschleunigung, hinten links und hinten rechts. |

## Patentansprüche

1. Verfahren zur fortlaufenden Ermittlung des Kraftschlußbeiwerts $\mu$ zwischen dem Reifen wenigstens eines angetriebenen Fahrzeugrads und dem Untergrund, auf dem es läuft, bei dem die Drehgeschwindigkeiten $V_{R1}$ und $V_{R2}$ der angetriebenen Fahrzeugräder und das Motormoment M oder eine davon abhängige Größe ermittelt werden und bei dem der oder die ermittelten $\mu$-Werte zur Anzeige kommen und/oder bei der Ermittlung weiterer Größen berücksichtight werden, dadurch gekennzeichnet, daß

a) Auf Basis der Bestimmungsgleichnungen

$$Y_{R1}(K + 1) = \hat{P}_{21} Y_{R1}(K) + \hat{P}_{11} U(K) + \hat{C}_1$$

die Parameter $\hat{P}_{11}$, $\hat{P}_{21}$ und $\hat{C}_1$ für das wenigstens eine Rad mit Hilfe von Identifikationsalgorithmen abgeschätzt werden, wobei $Y_{R1}(K)$ und $Y_{R1}(K+1)$ die zu dem Zeitpunken $K \cdot T_A$ und $(K+1) \cdot T_A$ ermittelten Radgeschwindigkeitsignale des wenigstens einen Fahrzeugrads sind und $U(K)$ das etmittelte Motormoment oder eine davon abhängige Größe zum Zeitpunkt $KT_A$, $T_A$ die Rechnertaktiet und K die Schrittzahl ist, und

b) aus den Parametern $\hat{P}_{11}$, $\hat{P}_{21}$ und $\hat{C}_1$ den Konstanten $T_A$, $i_t$ (Achsübersetzung), $\theta_H$ (Trägheitsmoment der angetrienbenen Achse), $\theta_T$ (Trägheitsmoment des Tellerads), $\theta_{Ri}$ (Trägheitsmoment des Ritzels), $F_{ZHstat}$ (statische Radlast des Rads) und $r_R$ (Radius des Rads) und der Geschwindigkeit eines angetriebenen Rads $V_{R1}$ oder $V_{R2}$ und der Normierungskonstanten $V_o$ ($V_{R1/Vo} = V_{R1;Vo}$ beliebig, auch 1) der Kraftschlußbeiwert $\hat{\mu}$ gemäß der Beziehung

$$\hat{\mu}_1 = \hat{K}_{21}(\hat{Z}_1 - V^*_{R1}) + \frac{C_{TH,21}}{F_{ZHstat} \cdot r_R}$$

oder einer Umrechnung davon ermittelt wird, wobei

$$\hat{K}_{21} = \frac{\theta^*_R \cdot V_o}{F_{Zhstat} \cdot r_R^2} \cdot \frac{(-1n\,\hat{P}_{21})}{T_A}$$

$$\theta_R^* = \frac{\theta_H}{2} + \frac{\theta_T + i_t^2 \cdot \theta_{Ri}}{2}$$

$$\hat{Z}_1 = \frac{\hat{C}_1}{1 - \hat{P}_{21}}$$

$$C_{Th,21} = -\frac{\theta_T + i_t^2 \theta_{Ri}}{4} (\omega_{R2} - \omega_{R1})$$

ist und $\omega_{R1}$ und $\omega_{R2}$ die Winkelbeschleunigungen der Räder sind.

2. Verfahren zur fortlaufenden Ermittlung der Steigung $K\mu$ der zwischen dem Reifen wenigstens eines angetriebenen Fahrzeugrads und dem Untergrund, auf dem es läuft, wirksamen $\mu$-Schlupfkurve, bei dem die Drehgeschwindigkeit $V_{R1}$ des angetriebenen Fahrzeugrads und das Motormoment M oder eine davon abhängige Größe ermittelt werden und bei dem der oder die ermittelten $K\mu$ Werte zur Anzeige kommen und/oder bei der Ermittlung weiterer Größen berücksichtigt werden, und/oder zur Bremsdruckregelung verwendet werden, dadurch gekennzeichnet, daß

a) auf der Basis der Bestimmungsgleichung

$$Y_{R1}(K + 1) = \hat{P}_{21} Y_{R1}(K) + \hat{P}_{11} U(K) + \hat{C}_1$$

die Parameter $\hat{P}_{11}$, $\hat{P}_{21}$ und $\hat{C}_1$ für das RAd mit Hilfe von Identifikationsalgorithmen abgeschätzt werden, wobei $Y_{R1}(K)$ und $Y_{R1}(K+1)$ die zu den Zeitpunkten $K \cdot T_A$ und $(K+1) \cdot T_A$ ermittelten Radgeschwindigkeitssignale des Fahrzeugrads und $\hat{U}(K)$ das ermittelte Motormoment oder die davon abhängige Größe zum Zeitpunkt $KT_A$, $T_A$ die Rechhnertaktzeit und K die Schrittzahl ist und

b) aus den Parametern $\hat{P}_{11}$, $\hat{P}_{21}$ und $\hat{C}_1$, den Konstanten $T_A$, $i_t$ (Achsunterstützung), $\theta_{Ri}$ (Trägheitsmoment der angetriebenen Achse), $\theta_r$ (Trägheitsmoment des Tellerrads), $\theta_R$ (Trägheitsmoment des Ritzels), $F_{ZHstat}$ (statische Radlast des Rads) und $r_{R1}$ (Radius des Rads) und der Geschwindigkeiten des angetriebenen Rads $V_{R1}$ und der Normierungskonstanten $V_o$ ($V_{R1/V_o} = V_{R1}$; beliebig, auch 1) die Steigung $\hat{K}\mu$ gemäß der Beziehung

$$\hat{K}\mu = \hat{K}_{21} \cdot V^*_{R1}$$

oder einer Umrechnung davon ermittelt wird, wobei

$$\hat{K}_{21} = \frac{\theta^*_R \cdot V_o}{F_{ZHstat} \cdot r_R^2} \cdot \frac{(-1n\,\hat{P}_{21})}{T_A}$$

$$\theta_R^* = \frac{\theta_H}{2} + \frac{\theta_T + i_t^2 \cdot \theta_{Ri}}{2}$$

ist $V^*_{R1}$ die mit der Konstanten $V_o$ normierte Radgeschwindigkeit ist.

3. Verfahren nach Anspruch 1, dadurch gekennzeichnet, daß der abgeschätzte Reibbeiwerte $\hat{\mu}_1$ unter Einbeziehung der ermittelten Fahrzueggeschwindigkeit zur Anzeige des Bremswegs ausgenutzt wird

4. Verfahren nach Anspruch 1, dadurch gekennezeichnet, daß in einem Abstandswarn- oder Regelsystem der ermittelte Reibbeiwert $\hat{\mu}_1$ zur Festlegung des Sollabstandes ausgenutzt wird

5. Verfahren nach Anspruch 2, dadurch gekennzeichnet, daß bei einer Antriebsschlupfregelung die ermittelte augenblickliche Steigung der µ-Schlupfkurve zur Beeinflussung des Bremsdrucks, und/oder des Motormoments im sinne ziner Regelung der Steigung auf einen vorgegebenen kleinen positiven Vergleichswert benutzt wird.

6. Verfaheren nach Anspruch 1 und 5, dadurch gekennzeichnet, daß zusätzlich der Vergleichswert durch den ermittelten Kraftschlußbeiwert $\hat{\mu}$ variiert wird.

## Claims

1. Process for continuous determination of the adhesion coefficient µ between the tyre of at least one driven vehicule wheel and its running surface, in which the rotational speeds $V_{R1}$ and $V_{R2}$ of the driven vehicule wheels and the engine torque M or variable dependent thereon are determined, characterised in that

a) on the basis of the conditional equations

$$\hat{Y}_{R1}(K + 1) = \hat{P}_{21} Y_{R1}(K) + \hat{P}_{11} U(K) + \hat{C}_1$$

the parameters $\hat{P}_{11}$, $\hat{P}_{21}$ and $\hat{C}_1$ for at least one wheel are estimated with the aid of identification algorithms, $Y_{R1}(K)$ and $Y_{R1}(K+1)$ being the wheel speed signals of the at least one vehicule wheel determined at the times $K \cdot T_A$ and $(K+1) \cdot T_A$ and U(K) being the engine torque determined at the time $KT_A$, $T_A$ being the computer cycle time and K being the increment number,

b) from the parameters $\hat{P}_{11}$, $\hat{P}_{21}$ and $\hat{C}_1$, the constants $T_A$, $i_t$ (axle transmission), $O_H$ (moment of inertia of the driven axle), $\theta_r$ (moment of inertia of the ring gear), $\theta_{Ri}$ (moment of inertia of the pinion), $F_{Zhstat}$ (static wheel load of the wheel) and $r_{R1}$ (radius of the wheel) and the speeds of the two driven wheels $V_{R1}$ and $V_{R2}$ as well as the scaling constant $V_o$ (as desired, also 1), the adhesion coefficient $\hat{\mu}$ is determined according to the equation

$$\hat{\mu}_1 = \hat{K}_{21}(\hat{Z}_1 - V^*_{R1}) + \frac{C_{TH,21}}{F_{ZHstat} \cdot r_R}$$

or an equivalent equation, where

$$\hat{K}_{21} = \frac{\theta^*_R \cdot V_o}{F_{ZHstat} \cdot r_R^2} \cdot \frac{(-1n\,\hat{P}_{21})}{T_A}$$

$$\theta_R^* = \frac{\theta_H}{2} + \frac{\theta_T + i_t^2 \cdot \theta_{Ri}}{2}$$

$$\hat{Z}_1 = \frac{\hat{C}_1}{1 - \hat{P}_{21}}$$

$V^*_{R1}$ and $V^*_{R2}$ are the wheel speeds scaled with the constant $V_o$

$$C_{Th,21} = - \frac{\theta_T + i_t^2 \theta_{RI}}{4} (\omega_{R2} - \omega_{R1})$$

and $\omega_{R1}$ and $\omega_{R2}$ are the angular accelerations of the wheels and

EP 0 394 308 B1

c) the determined $\mu$ value or values are displayed and/or taken consideration in the determination of further variables.

2. Process for continuous determination of the slope $K\mu$ of the $\mu$ slip curve effective between the tyre of at least one driven cvehicule wheel and its running surface, in which the rotational speed $V_{R1}$ of the driven vehicle wheel and the engine torque M or a variable dependent thereon are determined, characterised in that

a) on the basis of the conditional equation

$$Y_{R1}(K + 1) = \hat{P}_{21} Y_{R1}(K) + \hat{P}_{11}U(K) + \hat{C}_1$$

the parameters $\hat{P}_{11}$, $\hat{P}_{21}$ and $\hat{C}_{11}$ for at least on ewheel are estimated with the aid of identification algorithms, where $Y_{R1}(K)$ and $Y_{R1}(K+1)$ are the wheel speed signals of the at least one vehicle wheel determined at the times $K \cdot T_A$ and $(K+1) \cdot T_A$ and $\hat{U}(K)$ is the determined engine torque at the time $KT_A$, $T_A$ is the computer cycle time and K is the increment number,

b) from the parameters $\hat{P}_{11}$, $\hat{P}_{21}$ and $\hat{C}_1$, the constants $T_A$, $F_{Zhstat}$ (static wheel load of the wheel) and $r_{R1}$ (radius of the wheel) and the speeds of the at least one driven wheel $V_{R1}$ as well as the scaling constant $V_o$, the slope $\hat{K}\mu$ is determined according to the equation

$$\hat{K}\mu = \hat{K}_{21} \cdot V^*_{R,1}$$

or an equivalent equation, where

$$\hat{K}_{21} = \frac{\theta^*_R \cdot V_o}{F_{ZHstat} \cdot r_R^2} \cdot \frac{(-1n\,\hat{P}_{21})}{T_A}$$

$$\theta_R^* = \frac{\theta_H}{2} - \frac{\theta_T + i_t^2 \cdot \theta_{Ri}}{2}$$

and $V^*_{R1}$ is the wheel speed scaled with the constant $V_o$ and

c) the determined $K\mu$ value or value are displayed and/or taken consideration in the determination of further variables, and/or used for brake pressure control.

3. Process according to Claim 1, characterised in that the estimates friction coefficient $\hat{\mu}_1$ is utilised along with the determined vehicle speed to display the braking distance.

4. Process according to Claim 1, characterised in that the determined friction coefficient $\hat{\mu}_1$ is utilised in a distance warning or control system to fix the desired distance.

5. Process according to Claim 2, characterised in that in a drive slip control system the determined instantaneous slope of the $\mu$ slip curve is used for influencing the brake pressure, and/or the engine torque with the aim of controlling the slope to a predetermined small positive comparison value.

6. Process according to Claims 1 and 5, characterised in that in addition the comparison value is varied by the determined adhesion coefficient $\hat{\mu}$.

## Revendications

1. Procédé pour déterminer en continu le coefficient d'adhérence $\mu$ entre au moins une roue motrice de véhicule et sa surface de roulement, selon lequel on détermine les vitesses de rotation $V_{R1}$ et $V_{R2}$ des roues motrices du véhicule ainsi que le couple moteur M ou une grandeur qui en dépend, procédé caractérisé en ce que

a) sur la base des équations de définition

$$Y_{R1}(K + 1) = \hat{P}_{21} Y_{R1}(K) + \hat{P}_{11}U(K) + \hat{C}_1$$

on évalue les paramètres $\hat{P}_{11}$, $\hat{P}_{21}$ et $\hat{C}_1$ pour au moins une roue à l'aide d'algorithmes d'identification, relation dans laquelle $Y_{R1}(K)$ et $R_{R1}(K+1)$ étant les signaux de vitesse de roue déterminées aux instants $K \cdot TA$ et $(K+1) \cdot TA$ d'au moins une roue de véhicule et $U(K)$ étant le couple moteur déterminé à l'instant $KT_A$, $T_A$ étant le temps de la période de calcul et K le numéro du pas,

b) à partir des paramètres $\hat{P}_{11}$, $\hat{P}_{21}$ et $\hat{C}_1$, des constantes $T_A$, $i_t$ (rapport d'essieu), $\theta_H$ (moment d'inertie de l'essieu moteur), $\theta_T$ (moment d'inertie de la roue solaire), $\theta_{Ri}$ (moment d'inertie du pignon), $F_{ZHstat}$ (charge statique de la roue) et $r_{R1}$ (rayon de la roue) ainsi que de la vitesse des deux roues motrices $V_{R1}$, $V_{R2}$ et des constantes de normalisation $V_o$ (quelconque, peut également être égale à 1) on détermine le coefficient d'adhérence où selon la relation

$$\hat{\mu}_1 = -\hat{K}_{21}(\hat{Z}_1 - V^*_{21}) + \frac{C_{TH,21}}{F_{ZHstat} \cdot r_R}$$

ou une relation équivalente, dans laquelle

$$\hat{K}_{21} = \frac{\theta^*_R \cdot V_o}{F_{ZHstat} \cdot r_R^2} \cdot \frac{(-1n\,\hat{P}_{21})}{T_A}$$

7

$$\theta_R{}^* = \frac{\theta_H}{2} + \frac{\theta_T + i_t^2 \cdot \theta_{RI}}{2}$$

$$\hat{Z}_1 = \frac{\hat{C}_1}{1-\hat{P}_{21}}$$

$V^*{}_{21}$ et $V^*{}_{R2}$ représentant les vitesses de roues normalisées par la constante $V_o$

$$C_{Th,21} = \frac{\theta_T + i_t^2 \theta_{RI}}{4} (\omega_{R2} - \omega_{R1})$$

et $\omega_{R1}$ et $\omega_{R2}$ représentant les accélérations angulaires des roues et

c) on affiche la ou les coefficients d'adhérence $\mu$ et/ou on les utilise pour déterminer d'autres grandeurs.

2) Procédé pour déterminer en continu la pente $K\mu$ de la courbe de glissement $\mu$ agissant entre le pneumatique d'au moins une roue motrice du véhicule et sa surface de roulement, selon lequel on détermine la vitesse de rotation $V_{R1}$ de la roue motrice du véhicule et le couple moteur M ou une grandeur qui en dépend, procédé caractérisé en ce que

a) sur la base de l'équation de définition

$$Y_{R1}(K + 1) = \hat{P}_{21} Y_{1R}(K) + \hat{P}_{11} U(K) + \hat{C}_1$$

on évalue les paramètres $\hat{P}_{11}$, $\hat{P}_{21}$ et $\hat{C}_1$ pour au moins une roue à l'aide d'algorithmes d'identifications, relation dans laquelle $Y_{R1}(K)$ et $R_{R1}(K+1)$ étant les signaux de vitesse de roue déterminées aux instants $K \cdot T_A$ et $(K+1) \cdot T_A$ d'au moins une roue de véhicule et $U(K)$ étant le couple moteur déterminé à l'instant $KT_A$, $T_A$ étant le temps de la période de calcul et $K$ le numéro du pas,

b) à partir des paramètres $\hat{P}_{11}$, $\hat{P}_{21}$ et $\hat{C}_1$, des constantes $T_A$, $F_{ZHstat}$ (charge statique de la roue) et $r_{R1}$ (rayon de la roue) et de la vitesse d'au moins une roue motrice $R_{V1}$ et des constantes de normalisation $V_o$, on détermine la pente $\hat{K}\mu$ selon la relation

$$\hat{K}_\mu = \hat{K}_{21} \cdot V^*{}_{R,1}$$

ou une relation équivalente dans laquelle

$$\hat{K}_{21} = \frac{\theta^*{}_R \cdot V_o}{F_{ZHstat} \cdot r_R^2} \cdot \frac{(-\ln \hat{P}_{21})}{T_A}$$

$$\theta_R{}^* = \frac{\theta_H}{2} + \frac{\theta_T + i_t^2 \cdot \theta_{R1}}{2}$$

et $V^*{}_{R1}$ étant la vitesse de roue normalisée par la constante $V_o$ et

c) le ou les coefficients $K\mu$ étant affichés et/ou pris en compte pour déterminer d'autres grandeurs et/ou pour régler la pression de frein.

3. Procédé selon la revendication 1, caractérisé en ce que le coefficient d'adhérence $\hat{\mu}_1$ évalué est utilisé pour afficher la distance de freinage en tenant compte de la vitesse moyenne du véhicule.

4. Procédé selon la revendication 1, caractérisé en ce que dans le cas d'un système de régulation ou d'avertissement de distance, on utilise le coefficient d'adhérence $\hat{\mu}_1$, déterminé pour fixer la distance ou l'intervalle de consigne.

5. Procédé selon la revendication 2, caractérisé en ce que dans le cas d'une régulation anti-glissement on utilise la pente instantanée déterminée de la courbe de glissement $\mu$ pour influencer la pression de freinage et/ou le couple moteur dans le sens d'une régulation de la pente par rapport à une grandeur de comparaison positive, petite, prédéterminée.

6. Procédé selon les revendications 1 et 5, caractérisé en ce qu'on modifie en outre la grandeur de comparaison par le coefficient d'adhérence $\hat{\mu}$ déterminé.

Fig.1

Fig.2

Fig.3

Fig.4

Fig.5